# EUROPEAN PATENT APPLICATION

(11) **EP 3 188 048 A1**
(43) Date of publication of application: **05.07.2017**
(21) Application number: 16207161.7
(22) Date of filing: 28.12.2016
(51) Int. Cl.: G06F 17/30, G06F 9/445

(54) **METHOD FOR EXECUTING APPLICATION AND ELECTRONIC DEVICE SUPPORTING THE SAME**

(30) Priority: 28.12.2015 KR 20150187919
(71) Applicant: Samsung Electronics Co., Ltd, Gyeonggi-do 16677 (KR)
(72) Inventor: CHO, Hyung Min, 16944 Gyeonggi-do (KR); KIM, Dong Hyun, 16471 Gyeonggi-do (KR); KIM, Sung Ho, 05119 Seoul (KR)
(74) Representative: Grootscholten, Johannes A.M.

(57) **Abstract**

An application execution method performed in an electronic device is disclosed. The method includes extracting at least one keyword from content displayed in a first display region of the electronic device, outputting a shortcut of at least one recommended app in a second display region based on the extracted keyword, and executing the selected recommended app in the first display region if an input for selecting one of the at least one recommended app is received. The selected recommended app enters a specified execution state based on the extracted keyword.

## Description

### PRIORITY

The present application is related to and claims the benefit of a Korean p atent application filed on December 28, 2015 in the Korean Intellectual Property Office and assigned Serial number 10-2015-0187919, the entire disclosure of which is hereby incorporated by reference.

### BACKGROUND OF THE INVENTION

### 1. Field of the Invention

The present disclosure relates to a method for executing various applicat ions and an electronic device supporting the same.

### 2. Background of the Invention

Electronic devices, such as smartphones, tablet personal computers (PC) , and the like, may perform various functions including a voice call, a video call, a wire less data communication, a media output, and the like by using various applications (he reinafter referred to as an "app").

For example, a user may access wireless internet and search for informat ion by executing an internet connection app installed in the electronic device. As anoth er example, the user may play various games by installing game apps and may share a v ariety of information with the outside through a social networking service (SNS) app. F urthermore, the user may use various apps by using a multitasking function or a multi-window function at the same time.

Since a conventional electronic device recommends an app based on sim ple information without considering an action pattern or an app usage pattern of the use r upon recommending the app to the user, the electronic device fails to effectively reco mmend the app that the user needs. Furthermore, since the electronic device recommen ds an app while covering a portion of an execution screen of an app that is currently bei ng executed, it is inconvenient for the user to make use of the electronic device.

The above information is presented as background information only to assist with an understanding of the present disclosure. No determination has been made, and no assertion is made, as to whether any of the above might be applicable as prior art with regard to the present disclosure.

### SUMMARY OF THE INVENTION

Aspects of the present disclosure are to address at least the above-mentioned problems and/or disadvantages and to provide at least the advantages described below.

The method includes extracting at least one keyword from content displayed in a first display region of the electronic device, outputting a shortcut of at least one recommended app in a second display region, which is distinguished from the first display region, based on the extracted keyword, executing the selected recommended app in the first display region if an input for selecting one of the at least one recommended app is received, and allowing the selected recommended app to enter a specified execution state, based on the extracted keyword.

Other aspects, advantages, and salient features of the disclosure will become apparent to those skilled in the art from the following detailed description, which, taken in conjunction with the annexed drawings, discloses various embodiments of the present disclosure.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a drawing illustrating an electronic device in a network environ ment, according to various embodiments;
FIG. 2 illustrates an electronic device according to various embodiments
FIG. 3 is a flowchart illustrating a method for executing an application, according to various embodiments;
FIG. 4 is a view illustrating an exemplary screen indicating recommenda tion of an application through a keyword analysis in a memo app, according to various embodiments;
FIG. 5 is a view illustrating an exemplary screen indicating recommenda tion of an application through a keyword analysis in a message app, according to variou s embodiments;
FIG. 6 is a flowchart illustrating a method for displaying a recommende d app based on an app usage pattern of a user, according to various embodiments;
FIG. 7 is a view illustrating exemplary execution of a method for executi ng an application based on an app usage pattern of a user, according to various embodi ments;
FIG. 8 is a view illustrating a dynamic change of a recommended app, a ccording to various embodiments;
FIG. 9 is a view illustrating an exemplary screen recommending an app of the same category, according to various embodiments;
FIG. 10 is a block diagram illustrating an electronic device, according to various embodiments; and
FIG. 11 is a block diagram illustrating a program module, according to various embodiments.

Throughout the drawings, it should be noted that like reference numbers are used to depict the same or similar elements, features, and structures.

### DETAILED DESCRIPTION OF EMBODIMENTS OF THE PRESENT INVENTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary.

Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

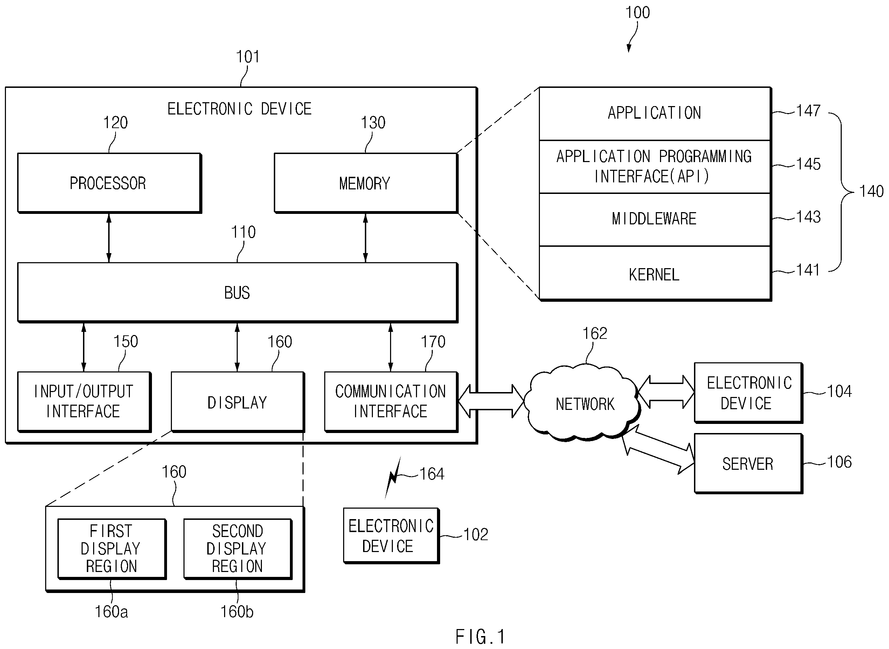

FIGURES 1 through 11, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic device.

Hereinafter, various embodiments of the present disclosure will be described with reference to the accompanying drawings. Accordingly, those of ordinary skill in the art will recognize that modification, equivalent, and/or alternative on the various embodiments described herein can be variously made without departing from the scope and spirit of the present disclosure. With regard to description of drawings, similar components may be marked by similar reference numerals.

In the disclosure disclosed herein, the expressions "have", "may have", "include" and "comprise", or "may include" and "may comprise" used herein indicate existence of corresponding features (for example, elements such as numeric values, functions, operations, or components) but do not exclude presence of additional features.

In the disclosure disclosed herein, the expressions "A or B", "at least one of A or/and B", or "one or more of A or/and B", and the like used herein may include any and all combinations of one or more of the associated listed items. For example, the term "A or B", "at least one of A and B", or "at least one of A or B" may refer to all of the case (1) where at least one A is included, the case (2) where at least one B is included, or the case (3) where both of at least one A and at least one B are included.

The terms, such as "first", "second", and the like used herein may refer to various elements of various embodiments of the present disclosure, but do not limit the elements. For example, such terms are used only to distinguish an element from another element and do not limit the order and/or priority of the elements. For example, a first user device and a second user device may represent different user devices irrespective of sequence or importance. For example, without departing the scope of the present disclosure, a first element may be referred to as a second element, and similarly, a second element may be referred to as a first element.

It will be understood that when an element (for example, a first element) is referred to as being "(operatively or communicatively) coupled with/to" or "connected to" another element (for example, a second element), it can be directly coupled with/to or connected to the other element or an intervening element (for example, a third element) may be present. In contrast, when an element (for example, a first element) is referred to as being "directly coupled with/to" or "directly connected to" another element (for example, a second element), it should be understood that there are no intervening element (for example, a third element).

According to the situation, the expression "configured to" used herein may be used as, for example, the expression "suitable for", "having the capacity to", "designed to", "adapted to", "made to", or "capable of". The term "configured to (or set to)" must not mean only "specifically designed to" in hardware. Instead, the expression "a device configured to" may mean that the device is "capable of" operating together with another device or other components. CPU, for example, a "processor configured to (or set to) perform A, B, and C" may mean a dedicated processor (for example, an embedded processor) for performing a corresponding operation or a generic-purpose processor (for example, a central processing unit (CPU) or an application processor) which may perform corresponding operations by executing one or more software programs which are stored in a memory device.

Terms used in this specification are used to describe specified embodiments of the present disclosure and are not intended to limit the scope of the present disclosure. The terms of a singular form may include plural forms unless otherwise specified. Unless otherwise defined herein, all the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal detect unless expressly so defined herein in various embodiments of the present disclosure. In some cases, even if terms are terms which are defined in the specification, they may not be interpreted to exclude embodiments of the present disclosure.

An electronic device according to various embodiments of the present disclosure may include at least one of smartphones, tablet personal computers (PCs), mobile phones, video telephones, electronic book readers, desktop PCs, laptop PCs, netbook computers, workstations, servers, personal digital assistants (PDAs), portable multimedia players (PMPs), MP3 players, mobile medical devices, cameras, and wearable devices. According to various embodiments of the present disclosure, the wearable devices may include accessories (for example, watches, rings, bracelets, ankle bracelets, glasses, contact lenses, or head-mounted devices (HMDs)), cloth-integrated types (for example, electronic clothes), body-attached types (for example, skin pads or tattoos), or implantable types (for example, implantable circuits).

In some embodiments of the present disclosure, the electronic device may be one of home appliances. The home appliances may include, for example, at least one of a digital video disk (DVD) player, an audio, a refrigerator, an air conditioner, a cleaner, an oven, a microwave oven, a washing machine, an air cleaner, a set-top box, a home automation control panel, a security control panel, a TV box (for example, Samsung HomeSync^{™}, Apple TV^{™}, or Google TV^{™}), a game console (for example, Xbox^{™} or PlayStation^{™}), an electronic dictionary, an electronic key, a camcorder, or an electronic panel.

In another embodiment of the present disclosure, the electronic device may include at least one of various medical devices (for example, various portable medical measurement devices (a blood glucose meter, a heart rate measuring device, a blood pressure measuring device, and a body temperature measuring device), a magnetic resonance angiography (MRA), a magnetic resonance imaging (MRI) device, a computed tomography (CT) device, a photographing device, and an ultrasonic device), a navigation system, a global navigation satellite system (GNSS), an event data recorder (EDR), a flight data recorder (FDR), a vehicular infotainment device, electronic devices for vessels (for example, a navigation device for vessels and a gyro compass), avionics, a security device, a vehicular head unit, an industrial or home robot, an automatic teller's machine (ATM) of a financial company, a point of sales (POS) of a store, or an internet of things (for example, a bulb, various sensors, an electricity or gas meter, a spring cooler device, a fire alarm device, a thermostat, an electric pole, a toaster, a sporting apparatus, a hot water tank, a heater, and a boiler).

According to some embodiments of the present disclosure, the electronic device may include at least one of a furniture or a part of a building/structure, an electronic board, an electronic signature receiving device, a projector, or various measurement devices (for example, a water service, electricity, gas, or electric wave measuring device). In various embodiments of the present disclosure, the electronic device may be one or a combination of the aforementioned devices. The electronic device according to some embodiments of the present disclosure may be a flexible electronic device. Further, the electronic device according to an embodiment of the present disclosure is not limited to the aforementioned devices, but may include new electronic devices produced due to the development of technologies.

Hereinafter, electronic devices according to an embodiment of the present disclosure will be described with reference to the accompanying drawings. The term "user" used herein may refer to a person who uses an electronic device or may refer to a device (for example, an artificial electronic device) that uses an electronic device.

FIG. 1 is a drawing illustrating an electronic device 101 in a network environment 100, according to various embodiments.

FIG. 1 is a diagram illustrating an electronic device in a network environment, according to various embodiments.

Referring to FIG. 1, there is illustrated an electronic device 101 in a network environment 100 according to various embodiments. The electronic device 101 may include a bus 110, a processor 120, a memory 130, an input/output (I/O) interface 150, a display 160, and a communication interface 170. According to an embodiment, the electronic device 101 may not include at least one of the above-described elements or may further include other element(s).

For example, the bus 110 may interconnect the above-described elements 120 to 170 and may include a circuit for conveying communications (e.g., a control message and/or data) among the above-described elements.

The processor 120 (e.g., the processor 120 of FIG. 1) may include one or more of a central processing unit (CPU), an application processor (AP), or a communication processor (CP). The processor 120 may perform, for example, data processing or an operation associated with control and/or communication of at least one other element(s) of the electronic device 101.

According to various embodiments, a processor 120 may recommend a user an app that is capable of being executed in the electronic device 101. The processor 120 may allow the user to easily access an app, which the user needs, by recommending the user the app based on a keyword extracted from an execution screen of an app or an app usage pattern of the user.

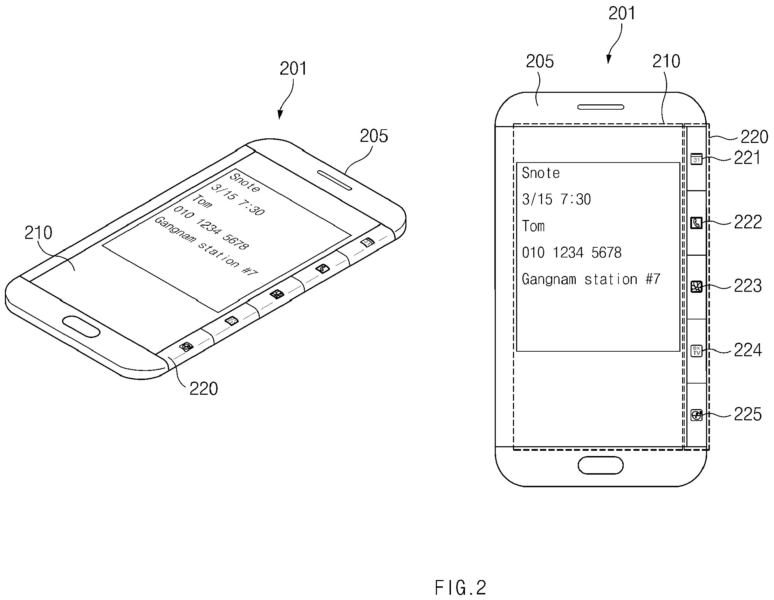

According to various embodiments, in the case where the user selects and executes an app of the recommended apps, the processor 120 may dynamically recommend another app. For example, in the case where the user executes a first app, the processor 120 may recommend and output second to fifth apps based on a keyword extracted from the first app. In the case where the user selects and executes the third app of the recommended apps, the processor 120 may recommend and output sixth to ninth apps based on a keyword extracted from the third app. Additional information about a method in which the processor 120 outputs the recommended app may be provided with reference to FIGS. 2 to 11.

The memory 130 may include a volatile and/or nonvolatile memory. For example, the memory 130 may store instructions or data associated with at least one other element(s) of the electronic device 101.

According to an embodiment, a memory 130 may store software and/or a program 140. According to various embodiments, the memory 130 may store the app usage pattern of the user. The app usage pattern may include a list of apps that have high possibility of use with regard to the app currently being output. The app usage pattern may be cumulatively collected and updated. The app usage pattern may be used to recommend the user an app associated with app execution.

According to an embodiment, the memory 130 may store software and/or a program 140. The program 140 may include, for example, a kernel 141, a middleware 143, an application programming interface (API) 145, and/or an application program (or "application") 147. At least a part of the kernel 141, the middleware 143, or the API 145 may be called an "operating system (OS)".

The kernel 141 may control or manage system resources (e.g., the bus 110, the processor 120, the memory 130, and the like) that are used to execute operations or functions of other programs (e.g., the middleware 143, the API 145, and the application program 147). Furthermore, the kernel 141 may provide an interface that allows the middleware 143, the API 145, or the application program 147 to access discrete elements of the electronic device 101 so as to control or manage system resources.

The middleware 143 may perform a mediation role such that the API 145 or the application program 147 communicates with the kernel 141 to exchange data.

Furthermore, the middleware 143 may process one or more task requests received from the application program 147 according to a priority. For example, the middleware 143 may assign the priority, which makes it possible to use a system resource (e.g., the bus 110, the processor 120, the memory 130, or the like) of the electronic device 101, to at least one of the application program 147. For example, the middleware 143 may process the one or more task requests according to the priority assigned to the at least one, which makes it possible to perform scheduling or load balancing on the one or more task requests.

The API 145 may be an interface through which the application 147 controls a function provided by the kernel 141 or the middleware 143, and may include, for example, at least one interface or function (e.g., an instruction) for a file control, a window control, image processing, a character control, or the like.

The I/O interface 150 may transmit an instruction or data, input from a user or another external device, to other element(s) of the electronic device 101. Furthermore, the I/O interface 150 may output an instruction or data, received from other element(s) of the electronic device 101, to a user or another external device.

The display 160 may include, for example, a liquid crystal display (LCD), a light-emitting diode (LED) display, an organic LED (OLED) display, or a microelectromechanical systems (MEMS) display, or an electronic paper display. The display 160 may display, for example, various kinds of content (e.g., a text, an image, a video, an icon, a symbol, and the like) to a user. The display 160 may include a touch screen and may receive, for example, a touch, gesture, proximity, or hovering input using an electronic pen or a portion of a user's body.

According to various embodiments, a display 160 may include a first display region 160a and a second display region 160b. The first display region 160a may be a main display region, and the second display region 160b may be a sub-display region. The first display region 160a and the second display region 160b may be regions that are distinguished from each other in a display panel or may be regions that are respectively implemented with different display panels.

According to various embodiments, the first display region 160a may be a region in which the app is practically being executed, and the second display region 160b may be a region in which a shortcut of the app, which is recommended to the user in connection with the app that is being executed in the first display region 160a, is displayed.

The communication interface 170 may establish communication between the electronic device 101 and an external device (e.g., a first external electronic device 102, a second external electronic device 104, or a server 106). For example, the communication interface 170 may be connected to a network 162 through wireless communication or wired communication to communicate with an external device (e.g., the second external electronic device 104 or the server 106).

The wireless communication may include at least one of, for example, LTE (long-term evolution), LTE-A (LTE Advance), CDMA (Code Division Multiple Access), WCDMA (Wideband CDMA), UMTS (Universal Mobile Telecommunications System), WiBro (Wireless Broadband), or GSM (Global System for Mobile Communications), or the like, as cellular communication protocol. Furthermore, the wireless communication may include, for example, a local area network 164. The local area network 164 may include at least one of a wireless fidelity (Wi-Fi), a near field communication (NFC), or a global navigation satellite system (GNSS), or the like. The GNSS may include at least one of a global positioning system (GPS), a global navigation satellite system (Glonass), Beidou Navigation Satellite System (hereinafter referred to as "Beidou"), the European global satellite-based navigation system (Galileo), or the like. In this specification, "GPS" and "GNSS" may be interchangeably used. The wired communication may include at least one of, for example, a universal serial bus (USB), a high definition multimedia interface (HDMI), a recommended standard-232 (RS-232), a plain old telephone service (POTS), or the like. The network 162 may include at least one of telecommunications networks, for example, a computer network (e.g., LAN or WAN), an Internet, or a telephone network.

Each of the first and second external electronic devices 102 and 104 may be a device of which the type is different from or the same as that of the electronic device 101. According to an embodiment, the server 106 may include a group of one or more servers. According to various embodiments, all or a portion of operations that the electronic device 101 will perform may be executed by another or plural electronic devices (e.g., the electronic devices 102 and 104 or the server 106). According to an embodiment, in the case where the electronic device 101 executes any function or service automatically or in response to a request, the electronic device 101 may not perform the function or the service internally, but, alternatively additionally, it may request at least a part of a function associated with the electronic device 101 at other device (e.g., the electronic device 102 or 104 or the server 106). The other electronic device (e.g., the electronic device 102 or 104 or the server 106) may execute the requested function or additional function and may transmit the execution result to the electronic device 101. The electronic device 101 may provide the requested function or service using the received result or may additionally process the received result to provide the requested function or service. To this end, for example, cloud computing, distributed computing, or client-server computing may be used.

FIG. 2 illustrates an electronic device according to various embodiments. In FIG. 2, an embodiment is exemplified as a first display region is a front display region and a second display region is a side (edge) display region. However, embodiments may not be limited thereto. An electronic device 201 may be the electronic device 101 of FIG. 1.

Referring to FIG. 2, the electronic device 201 may include a housing 205, a first display region 210, and a second display region 220 on an outer side thereof.

The housing 205 may include various buttons, speakers, sensors, and the like. The housing 205 may fix the first display region 210 and the second display region 220, and various panels, modules, circuits, and the like for driving the first display region 210 and the second display region 220 may be mounted in the interior of the housing 205.

According to various embodiments, the first display region 210 and the second display region 220 may be implemented with one display panel or may be respectively implemented with different display panels. The first display region 210 and the second display region 220 may correspond to the first display region 160a and the second display region 160b of FIG. 1, respectively.

The first display region 210 may be a main display region. A screen of an application being executed in the electronic device 101 may be output in the first display region 210. The second display region 220 may be a sub-display region. A description (e.g., a shortcut of an app recommended to the user in connection with a first app) associated with an app (hereinafter referred to as a "first app") output in the first display region 210 may be output in the second display region 220.

According to various embodiments, the second display region 220 may be a region in which an app that is associated with a keyword extracted from a screen of the first app being executed in the first display region 210 is recommended. For example, in the case where a memo app is being output in the first display region 210, based on a keyword extracted from a memo written in the memo app, the processor 120 may output a shortcut of an app associated with a keyword in the second display region 220.

According to various embodiments, the processor 120 may recommend an app, which has high possibility to be executed according to an app usage pattern of the user after the first app is executed, in the second display region 220. The processor 120 may refer to the app usage pattern of the user that is previously collected and stored in the memory 130.

According to various embodiments, the processor 120 may dynamically output shortcuts 221 to 225 of the recommended apps based on the app usage pattern of the user. In the case where the user selects and outputs an app of the recommended apps in the first display region 210, the processor 120 may update the recommended app of the second display region 220 based on the output recommended app.

According to various embodiments, in the case where the user executes one of the recommended apps displayed in the second display region 220, the running recommended app may be output in the first display region 210 by entering a specified execution state. For example, the running recommended app may be in the state where the user logs in with a user id, in the state where a specific keyword is found in a web, or in the state where a keyword is written in a specific field (e.g., the state where in an address book app, a phone number, a name, an email address, and the like are recorded). The user may easily execute a desired app with a touch operation without searching for a separate app, executing the found app, and entering a specific state.

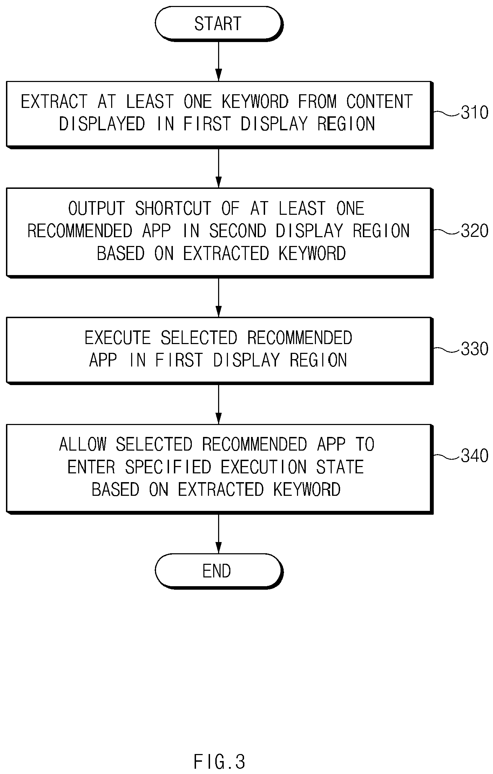

FIG. 3 is a flowchart illustrating a method for executing an application, according to various embodiments.

Referring to FIG. 3, in operation 310, the processor 120 may extract at least one keyword from content displayed in the first display region 210. The first display region 210 may be a main display of the electronic device 101 and at least one or more apps may be being executed in the first display region 210. For example, a user may record and store information by executing a memo app in the first display region 210. As another example, the user may send and receive a message to and from an external device by executing a message app in the first display region 210.

The processor 120 may extract at least one keyword from content output when a first app is executed in the first display region 210. The content may be a text, an image, an icon, and the like displayed in the process of executing the first app.

For example, the processor 120 may extract a date, time, a place, a name, and the like of text (including text extracted through writing recognition) included in the memo that the user records in the memo app, as keywords. As another example, the processor 120 may extract a date, time, a place, a name, and the like from a message that the user sends and receives to and from the outside user by using the message app, as keywords.

In operation 320, the processor 120 may output a shortcut of at least one recommended app in the second display region 220 distinguished from the first display region 210, based on the extracted keyword.

According to various embodiments, the second display region 220, which is a sub-display region, may be a region (e.g., an edge region, a side region, and the like) which is arranged in a second direction that is different from a first direction in which the first display region 210 is arranged.

According to various embodiments, the shortcut of the recommended app may be output according to a specified condition or sequence. For example, as the execution screen of the first app output in the first display region 210 is updated, another shortcut may be sequentially added (e.g., the addition of the recommended app to correspond a message that is additionally sent and received by the message app). As another example, the recommended app may be displayed based on an app usage pattern of the user associated with the first app (may be aligned in the order of the number of times by which the recommended app is used together with the first app).

In operation 330, if the processor 120 receives an input for selecting one of the recommended apps, the processor 120 may execute the selected recommended app in the first display region 210. The user may generate an input for selecting one of the recommended apps displayed in the second display region 220 (e.g., may touch the shortcut of the recommended app). The processor 120 may execute the recommended app selected according to the input. The selected recommended app may be executed in the first display region 210.

According to various embodiments, if the selected recommended app is executed, the shortcut of the first app that is being executed in the first display region 210 may be generated in the second display region 220.

In operation 340, the processor 120 may allow the selected recommended app to enter the specified execution state, based on the extracted keyword. The processor 120 may output the selected recommended app in the first display region 210 after applying the extracted keyword to the selected recommended app.

For example, in the case where the recommended app is an internet search app, the recommended app may be output in the state where the extracted keyword is found in a web page. As another example, in the case where the recommended app is an address book app, the recommended app may be output in the state where the extracted keyword (e.g., a name, a phone number, an address, and the like) is filled in a field of a template which is used to add a user.

According to various embodiments, if the selected recommended app is executed in the first display region 210, the processor 120 may update the second display region 220 based on the selected recommended app. The processor 120 may dynamically change the second display region 220 based on an app being executed newly in the first display region 210. The user may easily identify an app associated with the app being executed in the first display region 210 through the second display region 220 and may execute the recommended app, which entered a specified state, by a single touch input.

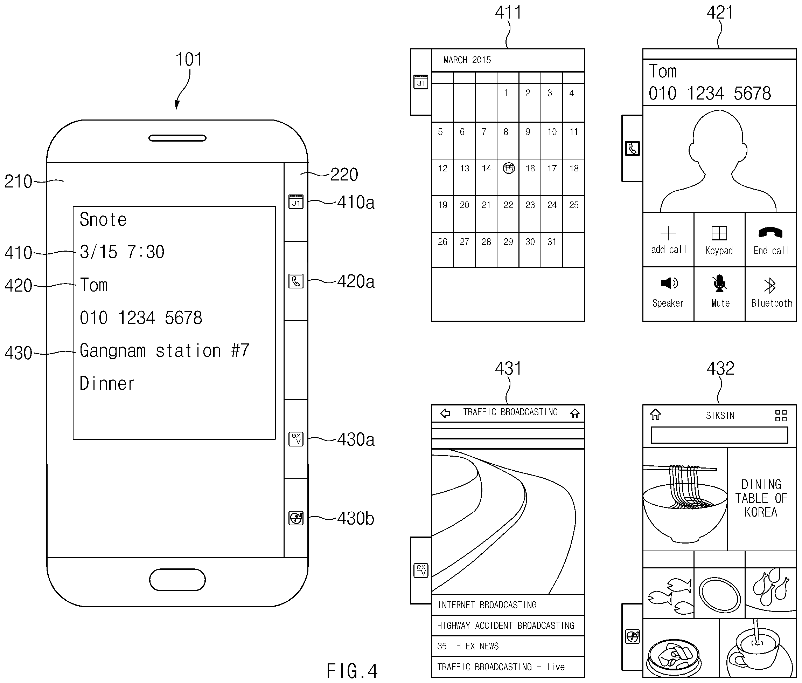

FIG. 4 is a view illustrating an exemplary screen indicating recommendation of an application through a keyword analysis in a memo app, according to various embodiments. In FIG. 4, an embodiment is exemplified as a memo app is executed. However, embodiments may not be limited thereto. For example, the embodiment may be applied to various apps, such as a note app, a web search app, and the like, which are capable of receiving a variety of information from a user.

Referring to FIG. 4, the processor 120 may execute the memo app in the first display region 210. The user may record information in the memo app by using various input devices such as a part of the user's body (e.g., a finger), a touch pen, and the like. For example, in the case where the user records an appointment with a friend, date/time information 410, information (e.g., a name and a phone number) of the other party 420, location information 430, and the like may be displayed in the first display region 210.

The processor 120 may extract an important keyword by recognizing and parsing content of a note displayed in the memo app. For example, the processor 120 may extract date/time information, such as 'March 15, 2015' and '07:30 PM', from '3/15 07:30' recorded by the user. Also, the processor 120 may extract information of the other party, such as 'Tom', '010-1234-5678', location information of 'Gangnam station #7', and the like, from a memo record of the user, as important keywords.

The processor 120 may output shortcuts 410a, 420a, 430a, and 430b of recommended apps 411, 421, 431, and 432 to the user in the second display region 220 based on the extracted keyword. For example, the processor 120 may output the shortcut 410a of a planner app in the second display region 220 based on the date/time information 410. In the case where the user selects the shortcut 410a of the planner app, the planner app 411 may be output in the first display region 210.

According to various embodiments, in the case where the user selects one of the shortcuts 410a, 420a, 430a, and 430b of the recommended apps, the selected app of the recommended apps 411, 421, 431, and 432 may enter a specified execution state based on the extracted keyword. For example, in the case where the user selects the shortcut 410a of the planner app, the planner app 411 may be in the state where a specific date or a specific time is selected based on the date/time information 410. As another example, in the case where the user selects the shortcut 430b of a restaurant recommending app, the restaurant recommending app 432 may be in the state where the recommended restaurant around the corresponding place is found based on the location information 430.

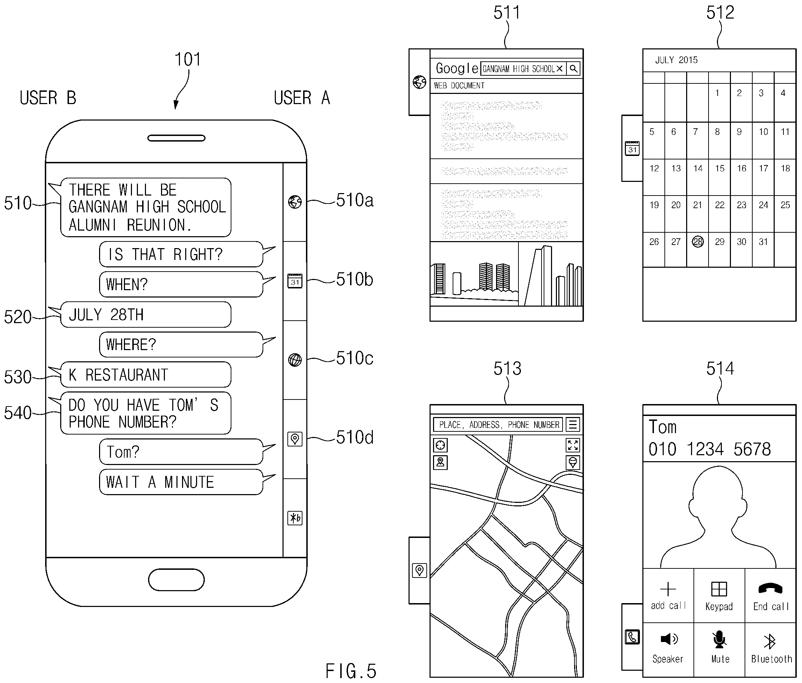

FIG. 5 is a view illustrating an exemplary screen indicating recommendation of an application through a keyword analysis in a message app, according to various embodiments. In FIG. 5, an embodiment is exemplified as a message app is executed. However, embodiments may not be limited thereto. For example, the embodiment may be applied to various apps, such as a chatting app, a text message app, and the like, which are capable of delivering a message to an external electronic device.

Referring to FIG. 5, the processor 120 may execute the message app in the first display region 210. For example, in the case where a user "A" sends and receives a message to and from a user "B", who uses an external device, in real time, the processor 120 may sequentially output a message that the user "A" sends and a message that is received from the user "B", in the first display region 210 in chronological order.

The processor 120 may display a shortcut of the recommended app in the second display region 220 based on a keyword extracted from the sent/received message.

For example, in the case where the user "A" sends and receives a message about a schedule for alumni reunion to and from the user "B", the processor 120 may extract 'Gangnam high school', 'alumni reunion' 'Gangnam high school alumni reunion', and the like from a message 510, which includes 'Gangnam high school', 'alumni reunion', and the like, as keywords.

The processor 120 may output a shortcut 510a of an internet connection app in the second display region 220. In the case where the user selects the shortcut 510a, the processor 120 may output a screen 511 in which the keywords such as 'Gangnam high school', 'alumni reunion' 'Gangnam high school alumni reunion' and the like, are found in a search site such as Google or the like, in the first display region 210.

Furthermore, the processor 120 may extract date information from a message 520 including the date information as a keyword and may output a shortcut 510b of the planner app based on the extracted date information. In the case where the user selects the shortcut 510b of the planner app, the planner app 512 in which the corresponding date is displayed may be output.

Furthermore, the processor 120 may extract place information from a message 530 including the place information as a keyword and may output a shortcut 510c of a map app. In the case where the user selects the shortcut 510c of the map app, a screen 513, in which a moving route from a specified location (e.g., a house of the user) to a location extracted as the keyword is displayed, may be output in the first display region 210.

Furthermore, the processor 120 may extract a name from a message 540 including name information as a keyword and may output a shortcut 510d of an address book app. In the case where the user selects the shortcut 510d of the address book app, a screen 514, in which the name that is extracted as the keyword is found in the address book app and is displayed, may be output in the first display region 210.

According to various embodiments, if the user selects one of the recommended apps displayed in the second display region 220, the selected recommended app may be output in the first display region 210. In this case, the shortcut of the message app being output in the first display region 210 may be arranged on the uppermost side of the second display region 220. In the case where the user wants to return to the message app again, the user may easily return to the previous conversation state by selecting the shortcut of the message app displayed in the second display region 220.

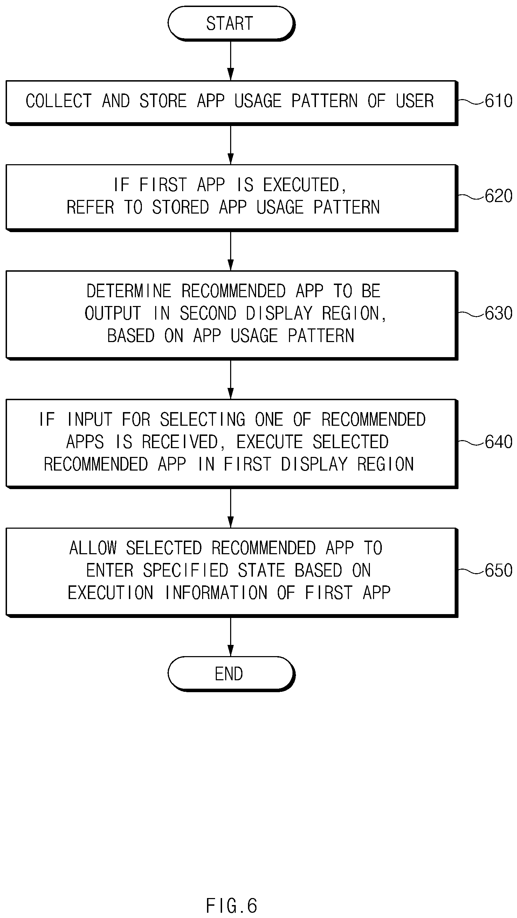

FIG. 6 is a flowchart illustrating a method for displaying a recommended app based on an app usage pattern of a user, according to various embodiments.

Referring to FIG. 6, in operation 610, the processor 120 may collect and store an app usage pattern of a user. In the state where the user executes a first app in the first display region 210, the processor 120 may collect information about an app, which is simultaneously being executed through multitasking, or an app executed within a specified time (e.g., a minute) after the first app ends and may store the collected information together with identification information associated with the first app.

In operation 620, if the first app is executed, the processor 120 may refer to the app usage pattern stored in the memory 130.

In operation 630, the processor 120 may determine a recommended app to be output in the second display region 220 based on the app usage pattern. For example, the processor 120 may output shortcuts of second to fifth apps in the second display region 220 in the order of the number of times by which the apps are used together with the first app.

In operation 640, if the processor 120 receives an input for selecting one of the recommended apps, the processor 120 may execute the selected recommended app in the first display region 210.

In operation 650, the processor 120 may allow the selected recommended app to enter the specified execution state, based on execution information of the first app. For example, the processor 120 may allow the selected recommended app to enter the log-in state, based on log-in information of the first app. As another example, the processor 120 may provide search information, payment information, and the like, which are used in the first app, to a second app and may allow the second app to use the provided information.

According to various embodiments, an application execution method performed in an electronic device, the method may include extracting at least one keyword from content displayed in a first display region of the electronic device, outputting a shortcut of at least one recommended app in a second display region, which is distinguished from the first display region, based on the extracted keyword, if an input for selecting one of the at least one recommended app is received, executing the selected recommended app in the first display region and allowing the selected recommended app to enter a specified execution state, based on the extracted keyword.

According to various embodiments, the outputting of the shortcut may include outputting the shortcut in the second display region that is arranged adjacent to the first display region.

According to various embodiments, the outputting of the shortcut may include determining a display sequence of the recommended apps based on an app usage pattern of a user stored in a memory of the electronic device.

According to various embodiments, the determining of the display sequence may include determining the display sequence based on the number of times that an app, which is executed together with a first app displayed in the first display region at the same time or within a specified time range, is executed.

According to various embodiments, the outputting of the shortcut may include outputting an app, of which a category is equal or similar to a category of a first app that is output in the first display region, in the second display region.

According to various embodiments, the executing the selected recommended app may include displaying a shortcut of a first app output in the first display region in the second display region.

According to various embodiments, the allowing of the selected recommended app to enter the specified execution state may include recording the keyword in a data input field of the selected recommended app automatically.

According to various embodiments, the method further include updating the second display region based on the selected recommended app if the selected recommended app is executed in the first display region.

According to various embodiments, the extracting of the at least one keyword may include extracting the keyword from at least one of a memo app, a message app, and a social networking service (SNS) app that are being executed in the first display region.

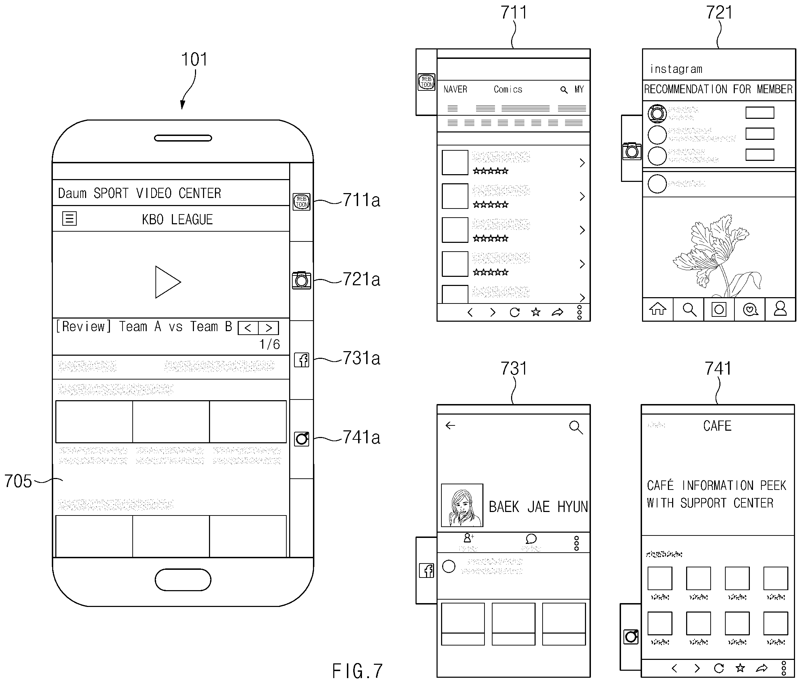

FIG. 7 is a view illustrating exemplary execution of a method for executing an application based on an app usage pattern of a user, according to various embodiments. In FIG. 7, an embodiment is exemplified. However, embodiments may not be limited thereto.

Referring to FIG. 7, the processor 120 may output a first app 705 (e.g., an internet search app) in the first display region 210. The processor 120 may output shortcuts 711a, 721a, 731a, and 741a of recommended apps 711, 721, 731, and 741 in the second display region 220 with reference to an app usage pattern of a user stored in the memory 130. For example, the processor 120 may output the shortcuts 711a, 721a, 731a, and 741a of the recommended apps 711, 721, 731, and 741 in the form of a bookmark. The user may easily switch an app output in the first display region 210 by selecting a shortcut of the app to be switched.

The app usage pattern of the user may include a list of apps that have high possibility of use after the user used the first app 705. The app usage pattern may be cumulatively collected and updated. According to various embodiments, the processor 120 may store the app usage pattern of the user based on app execution information collected from a specified past time point to a current time point.

For example, in the case where the user switches from the first app 705 to the second app 711 (e.g., a webtune app) 100 times, to the third app 721 (e.g., Instagram®) 50 times, and to the fourth app 731 (e.g., Facebook®) 25 times while the user uses the first app 705 through the first display region 210, the processor 120 may sequentially arrange shortcuts of second to fourth apps from an uppermost side of the second display region 220.

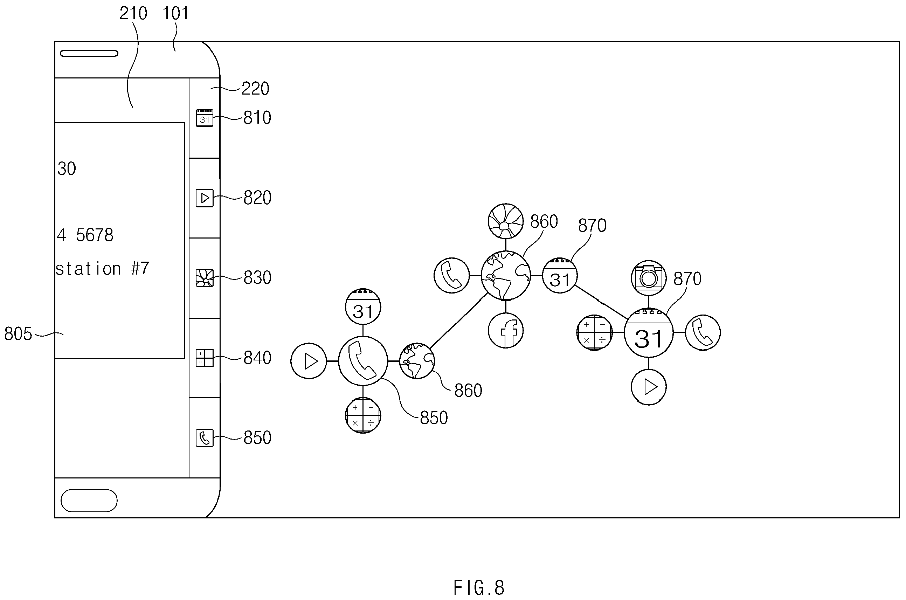

FIG. 8 is a view illustrating a dynamic change of a recommended app, according to various embodiments.

Referring to FIG. 8, the processor 120 may output shortcuts 810 to 850 of recommended apps associated with a first app 805 (e.g., a message app), which is being executed in the first display region 210, in the second display region 220.

For example, the processor 120 may determine the recommended app based on a keyword extracted in a screen of the first display region 210 according to an execution of the first app 805 and may output the corresponding shortcut in the second display region 220. Alternatively, on the basis of the app usage pattern of a user, the processor 120 may determine apps that have high possibility of use together with the first app 705 as the recommended apps sequentially and may output the corresponding shortcuts in the second display region 220.

In the case where the user selects a shortcut 850 of a fifth app (e.g., a call app) in the second display region 220, the execution screen of the fifth app may be output in the first display region 210. The processor 120 may update the recommended app displayed in the second display region 220 based on the fifth app (e.g., the call app). The processor 120 may determine the recommended app based on a keyword extracted in the execution screen of the fifth app (e.g., the call app) or the app usage pattern of the user associated with the fifth app (e.g., the call app) and may output a shortcut in the second display region 220.

In the case where the user executes a sixth app and a seventh app of the recommended apps in the first display region 210 by sequentially selecting a shortcut 860 of the sixth app (e.g., an internet search app) and a shortcut 870 of the seventh app (e.g., a planner app), the processor 120 may change the recommended app displayed in the second display region 220 based on the selected app.

According to various embodiments, the processor 120 may change the recommended app displayed in the second display region 220 at a specified time interval. For example, in the case where the time is changed from 11:00AM to 12:00PM while the user is executing the first app in the first display region 210, a shortcut of a restaurant recommendation app may be added to the list of the recommended app.

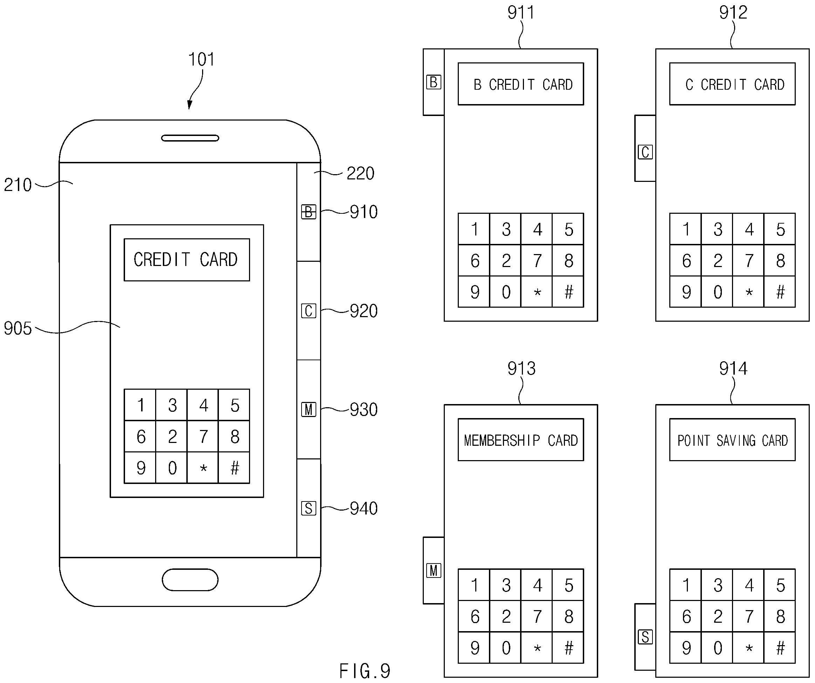

FIG. 9 is a view illustrating an exemplary screen recommending an app of the same category, according to various embodiments. In FIG. 9, an embodiment of the present disclosure is exemplified. However, embodiments may not be limited thereto.

Referring to FIG. 9, the processor 120 may output a recommended app of a category (or attribute) that is the same as the category of a first app output in the first display region 210, in the second display region 220.

For example, in the case where a first payment app 905 (e.g., a payment app for a credit card of "A" company) is being executed in the first display region 210, the processor 120 may output shortcuts 910 and 920 of other second to third payment apps 911 and 912 (e.g., a payment app for credit card of "B" company or "C" company) in the second display region 220. Furthermore, the processor 120 may output shortcuts 930 and 940 of a membership card app 913 and a point saving card app 914 which are able to be used together with the first payment app 905, in the second display region 220.

As another example, in the case where the user executes an SNS app (e.g., Facebook®) in the first display region 210, the processor 120 may recommend a Twitter® app, an Instagram® app, and the like of the same category in the second display region 220.

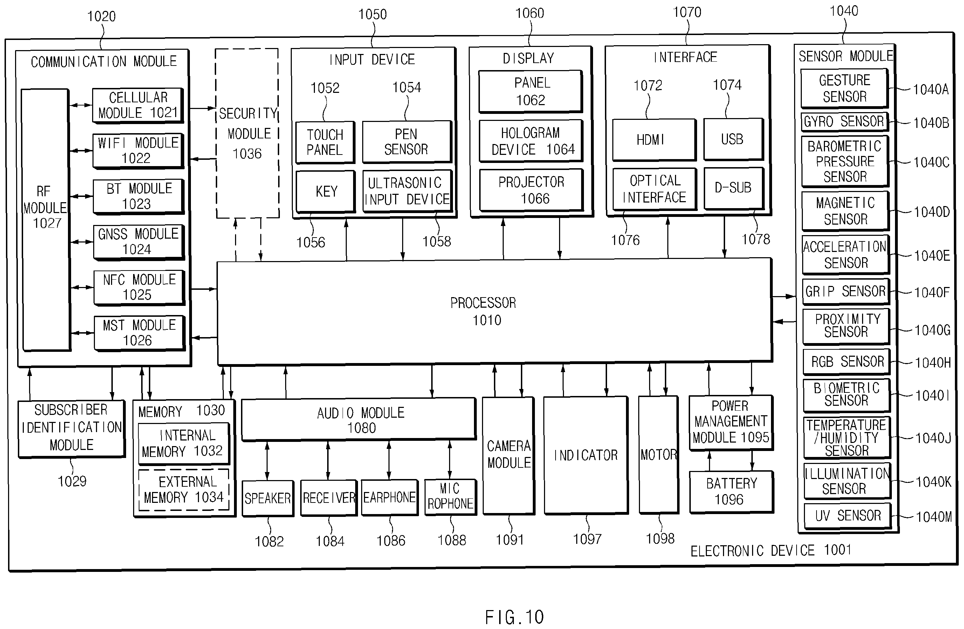

FIG. 10 is a block diagram of an electronic device according to various embodiments. An electronic device 1001 may include, for example, all or a part of the electronic device 101 illustrated in FIG. 1. The electronic device 1001 may include one or more processors (e.g., an application processor (AP)) 1010, a communication module 1020, a subscriber identification module 1029, a memory 1030, a sensor module 1040, an input device 1050, a display 1060, an interface 1070, an audio module 1080, a camera module 1091, a power management module 1095, a battery 1096, an indicator 1097, and a motor 1098.

The processor 1010 may drive an operating system (OS) or an application to control a plurality of hardware or software elements connected to the processor 1010 and may process and compute a variety of data. The processor 1010 may be implemented with a System on Chip (SoC), for example. According to an embodiment, the processor 1010 may further include a graphic processing unit (GPU) and/or an image signal processor. The processor 1010 may include at least a part (e.g., a cellular module 1021) of elements illustrated in FIG. 10. The processor 1010 may load and process an instruction or data, which is received from at least one of other elements (e.g., a nonvolatile memory) and may store a variety of data in a nonvolatile memory.

The communication module 1020 may be configured the same as or similar to the communication interface 170 of FIG. 1. The communication module 1020 may include a cellular module 1021, a Wi-Fi module 1022, a Bluetooth (BT) module 1023, a GNSS module 1024 (e.g., a GPS module, a Glonass module, a Beidou module, or a Galileo module), a near field communication (NFC) module 1025, and a radio frequency (RF) module 1027.

The cellular module 1021 may provide voice communication, video communication, a message service, an Internet service or the like through a communication network. According to an embodiment, the cellular module 1021 may perform discrimination and authentication of the electronic device 1001 within a communication network using the subscriber identification module 1029 (e.g., a SIM card), for example. According to an embodiment, the cellular module 1021 may perform at least a portion of functions that the processor 1010 provides. According to an embodiment, the cellular module 1021 may include a communication processor (CP).

Each of the Wi-Fi module 1022, the BT module 1023, the GNSS module 1024, and the NFC module 1025 may include a processor for processing data exchanged through a corresponding module, for example. According to an embodiment, at least a part (e.g., two or more elements) of the cellular module 1021, the Wi-Fi module 1022, the BT module 1023, the GNSS module 1024, or the NFC module 1025 may be included within one Integrated Circuit (IC) or an IC package.

The RF module 1027 may transmit and receive, for example, a communication signal (e.g., an RF signal). The RF module 1027 may include, for example, a transceiver, a power amplifier module (PAM), a frequency filter, a low noise amplifier (LNA), an antenna, or the like. According to another embodiment, at least one of the cellular module 1021, the Wi-Fi module 1022, the BT module 1023, the GNSS module 1024, or the NFC module 1025 may transmit and receive an RF signal through a separate RF module.

The subscriber identification module 1029 may include, for example, a card and/or embedded SIM that includes a subscriber identification module and may include unique identify information (e.g., integrated circuit card identifier (ICCID)) or subscriber information (e.g., international mobile subscriber identity (IMSI)).

The memory 1030 (e.g., the memory 130) may include an internal memory 1032 or an external memory 1034. For example, the internal memory 1032 may include at least one of a volatile memory (e.g., a dynamic random access memory (DRAM), a static RAM (SRAM), or a synchronous DRAM (SDRAM)), a nonvolatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a flash memory (e.g., a NAND flash memory, or a NOR flash memory), a hard drive, or a solid state drive (SSD).

The external memory 1034 may include a flash drive, for example, compact flash (CF), secure digital (SD), micro secure digital (Micro-SD), mini secure digital (Mini-SD), extreme digital (xD), multimedia card (MMC), a memory stick, or the like. The external memory 1034 may be functionally and/or physically connected with the electronic device 1001 through various interfaces.

The sensor module 1040 may measure, for example, a physical quantity or may detect an operation state of the electronic device 1001. The sensor module 1040 may convert the measured or detected information to an electric signal. The sensor module 1040 may include at least one of a gesture sensor 1040A, a gyro sensor 1040B, a barometric pressure sensor 1040C, a magnetic sensor 1040D, an acceleration sensor 1040E, a grip sensor 1040F, a proximity sensor 1040G, a color sensor 1040H (e.g., red, green, blue (RGB) sensor), a biometric sensor 1040I, a temperature/humidity sensor 1040J, an illuminance sensor 1040K, or an UV sensor 1040M. Even though not illustrated, additionally or alternatively, the sensor module 1040 may include, for example, an E-nose sensor, an electromyography sensor (EMG) sensor, an electroencephalogram (EEG) sensor, an electrocardiogram (ECG) sensor, an infrared (IR) sensor, an iris sensor, and/or a fingerprint sensor. The sensor module 1040 may further include a control circuit for controlling at least one or more sensors included therein. According to an embodiment, the electronic device 1001 may further include a processor which is a part of the processor 1010 or independent of the processor 1010 and is configured to control the sensor module 1040. The processor may control the sensor module 1040 while the processor 1010 remains at a sleep state.

The input device 1050 may include, for example, a touch panel 1052, a (digital) pen sensor 1054, a key 1056, or an ultrasonic input device 1058. The touch panel 1052 may use at least one of capacitive, resistive, infrared and ultrasonic detecting methods. Also, the touch panel 1052 may further include a control circuit. The touch panel 1052 may further include a tactile layer to provide a tactile reaction to a user.

The (digital) pen sensor 1054 may be, for example, a portion of a touch panel or may include an additional sheet for recognition. The key 1056 may include, for example, a physical button, an optical key, a keypad, or the like. The ultrasonic input device 1058 may detect (or sense) an ultrasonic signal, which is generated from an input device, through a microphone (e.g., a microphone 1088) and may check data corresponding to the detected ultrasonic signal.

The display 1060 (e.g., the display 160) may include a panel 1062, a hologram device 1064, or a projector 1066. The panel 1062 may be configured the same as or similar to the display 160 of FIG. 1. The panel 1062 may be implemented to be flexible, transparent or wearable, for example. The panel 1062 and the touch panel 1052 may be integrated into a single module. The hologram device 1064 may display a stereoscopic image in a space using a light interference phenomenon. The projector 1066 may project light onto a screen so as to display an image. The screen may be arranged inside or outside the electronic device 1001. According to an embodiment, the display 1060 may further include a control circuit for controlling the panel 1062, the hologram device 1064, or the projector 1066.

The interface 1070 may include, for example, a high-definition multimedia interface (HDMI) 1072, a universal serial bus (USB) 1074, an optical interface 1076, or a D-subminiature (D-sub) 1078. The interface 1070 may be included, for example, in the communication interface 170 illustrated in FIG. 1. Additionally or alternatively, the interface 1070 may include, for example, a mobile high definition link (MHL) interface, a SD card/multi-media card (MMC) interface, or an infrared data association (IrDA) standard interface.

The audio module 1080 may convert a sound and an electrical signal in dual directions. At least a part of the audio module 1080 may be included, for example, in the input/output interface 150 illustrated in FIG. 1. The audio module 1080 may process, for example, sound information that is input or output through a speaker 1082, a receiver 1084, an earphone 1086, or a microphone 1088.

The camera module 1091 for shooting a still image or a video may include, for example, at least one image sensor (e.g., a front sensor or a rear sensor), a lens, an image signal processor (ISP), or a flash (e.g., an LED or a xenon lamp).

The power management module 1095 may manage, for example, power of the electronic device 1001. According to an embodiment, a power management integrated circuit (PMIC) a charger IC, or a battery or fuel gauge may be included in the power management module 1095. The PMIC may have a wired charging method and/or a wireless charging method. The wireless charging method may include, for example, a magnetic resonance method, a magnetic induction method or an electromagnetic method and may further include an additional circuit, for example, a coil loop, a resonant circuit, a rectifier, or the like. The battery gauge may measure, for example, a remaining capacity of the battery 1096 and a voltage, current or temperature thereof while the battery is charged. The battery 1096 may include, for example, a rechargeable battery or a solar battery.

The indicator 1097 may display a specific state of the electronic device 1001 or a part thereof (e.g., the processor 1010), such as a booting state, a message state, a charging state, and the like. The motor 1098 may convert an electrical signal into a mechanical vibration and may generate a vibration effect, a haptic effect, or the like. Even though not illustrated, a processing device (e.g., a GPU) for supporting a mobile TV may be included in the electronic device 1001. The processing device for supporting a mobile TV may process media data according to the standards of digital multimedia broadcasting (DMB), digital video broadcasting (DVB), MediaFlo™, or the like.

Each of the above-mentioned elements may be configured with one or more components, and the names of the elements may be changed according to the type of the electronic device. The electronic device according to various embodiments may include at least one of the above-mentioned elements, and some elements may be omitted or other additional elements may be added. Furthermore, some of the elements of the electronic device according to various embodiments may be combined with each other so as to form one entity, so that the functions of the elements may be performed in the same manner as before the combination.

According to various embodiments, an electronic device may include a processor, a memory operatively connected to the processor and a display divided into a first display region and a second display region, wherein the processor is configured to extract at least one keyword from content displayed in the first display region, output a shortcut of at least one recommended app in the second display region, based on the extracted keyword, if an input for selecting one of the at least one recommended app is received, execute the selected recommended app in the first display region and allow the selected recommended app to enter a specified execution state, based on the extracted keyword.

According to various embodiments, the second display region is arranged adjacent to the first display region.

According to various embodiments, a display panel corresponding to the first display region is distinguished from a display panel corresponding to the second display region.

According to various embodiments, the memory stores an app usage pattern of a user, and the processor determines a display sequence of the recommended apps based on the app usage pattern.

According to various embodiments, the processor determines the display sequence based on the number of times that an app, which is executed together with a first app displayed in the first display region at the same time or within a specified time range, is executed.

According to various embodiments, the processor outputs an app, of which a category is equal or similar to a category of a first app that is output in the first display region, in the second display region.

According to various embodiments, the processor displays a shortcut of a first app output in the first display region in the second display region.

According to various embodiments, the processor records the keyword in a data input field of the selected recommended app automatically.

According to various embodiments, the processor updates the second display region based on the selected recommended app if the selected recommended app is executed in the first display region.

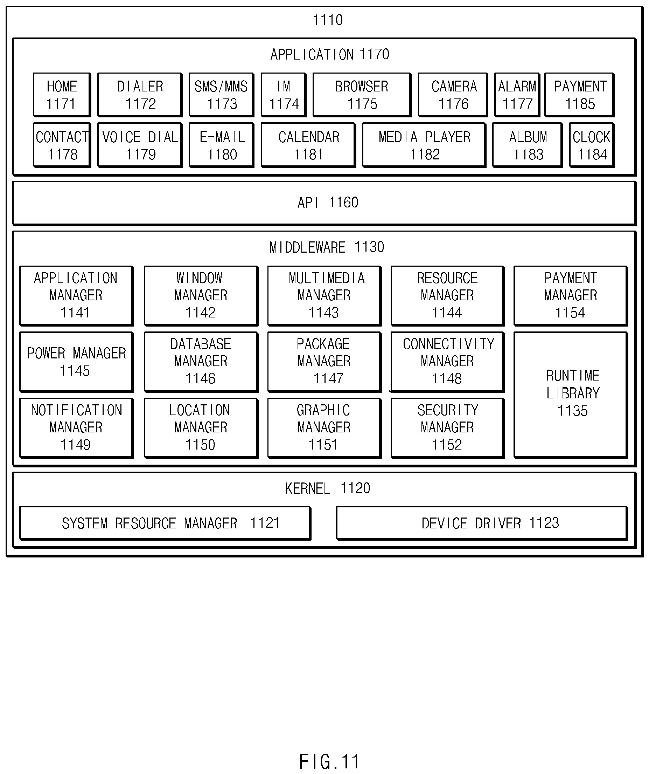

FIG. 11 is a block diagram of a program module according to various embodiments. According to an embodiment, a program module 1110 (e.g., the program 140) may include an operating system (OS) to control resources associated with an electronic device (e.g., the electronic device 101) and/or diverse applications (e.g., the application program 147) driven on the OS. The OS may be, for example, Android™, iOS, Windows®, Symbian, Tizen®, or Bada.

The program module 1110 may include a kernel 1120, a middleware 1130, an application programming interface (API) 1160, and/or an application 1170. At least a part of the program module 1110 may be preloaded on an electronic device or may be downloadable from an external electronic device (e.g., the external electronic device 102, and the like).

The kernel 1120 (e.g., the kernel 141) may include, for example, a system resource manager 1121 and/or a device driver 1123. The system resource manager 1121 may perform control, allocation, or retrieval of system resources. According to an embodiment, the system resource manager 1121 may include a process managing part, a memory managing part, or a file system managing part. The device driver 1123 may include, for example, a display driver, a camera driver, a Bluetooth driver, a shared memory driver, an USB driver, a keypad driver, a Wi-Fi driver, an audio driver, or an inter-process communication (IPC) driver.

The middleware 1130 may provide, for example, a function which the application 1170 needs in common, or may provide diverse functions to the application 1170 through the API 1160 to allow the application 1170 to efficiently use limited system resources of the electronic device. According to an embodiment, the middleware 1130 (e.g., the middleware 143) may include at least one of a runtime library 1135, an application manager 1141, a window manager 1142, a multimedia manager 1143, a resource manager 1144, a power manager 1145, a database manager 1146, a package manager 1147, a connectivity manager 1148, a notification manager 1149, a location manager 1150, a graphic manager 1151, or a security manager 1152.

The runtime library 1135 may include, for example, a library module which is used by a compiler to add a new function through a programming language while the application 1170 is being executed. The runtime library 1135 may perform input/output management, memory management, or capacities about arithmetic functions.

The application manager 1141 may manage, for example, a life cycle of at least one application of the application 1170. The window manager 1142 may manage a GUI resource which is used in a screen. The multimedia manager 1143 may identify a format used for playing diverse media files and may perform encoding or decoding of media files by using a codec suitable for the format. The resource manager 1144 may manage resources such as a storage space, memory, or source code of at least one application of the application 1170.

The power manager 1145 may operate, for example, with a basic input/output system (BIOS) to manage a battery or power and may provide power information for an operation of an electronic device. The database manager 1146 may generate, search for, or modify database which is to be used in at least one application of the application 1170. The package manager 1147 may install or update an application which is distributed in the form of a package file.

The connectivity manager 1148 may manage, for example, wireless connection such as Wi-Fi or Bluetooth. The notification manager 1149 may display or notify an event such as arrival message, appointment, or proximity notification in a mode that does not disturb a user. The location manager 1150 may manage location information of an electronic device. The graphic manager 1151 may manage a graphic effect that is provided to a user or manage a user interface relevant thereto. The security manager 1152 may provide a general security function used for system security or user authentication. According to an embodiment, in the case where an electronic device (e.g., the electronic device 101) includes a telephony function, the middleware 1130 may further includes a telephony manager for managing a voice or video call function of the electronic device.

The middleware 1130 may include a middleware module that combines diverse functions of the above-described elements. The middleware 1130 may provide a module specialized to each OS kind to provide differentiated functions. Additionally, the middleware 1130 may remove a part of the preexisting elements, dynamically, or may add a new element thereto.

The API 1160 (e.g., the API 145) may be, for example, a set of programming functions and may be provided with a configuration which is variable depending on an OS. For example, in the case where an OS is the Android™ or the iOS, it may be permissible to provide one API set per platform. In the case where an OS is the Tizen®, it may be permissible to provide two or more API sets per platform.

The application 1170 (e.g., the application program 147) may include, for example, one or more applications capable of providing functions for a home 1171, a dialer 1172, an SMS/MMS 1173, an instant message (IM) 1174, a browser 1175, a camera 1176, an alarm 1177, a contact 1178, a voice dial 1179, an e-mail 1180, a calendar 1181, a media player 1182, an album 1183, and a clock 1184, or for offering health care (e.g., measuring an exercise quantity or blood sugar) or environment information (e.g., atmospheric pressure, humidity, or temperature).

According to an embodiment, the application 1170 may include an application (hereinafter referred to as "information exchanging application" for descriptive convenience) to support information exchange between the electronic device (e.g., the electronic device 101) and an external electronic device (e.g., the electronic device 102 or 104). The information exchanging application may include, for example, a notification relay application for transmitting specific information to the external electronic device, or a device management application for managing the external electronic device.

For example, the notification relay application may include a function of transmitting notification information, which arise from other applications (e.g., applications for SMS/MMS, e-mail, health care, or environmental information), to an external electronic device (e.g., the electronic device 102 or 104). Additionally, the notification relay application may receive, for example, notification information from an external electronic device and provide the notification information to a user.

The device management application may manage (e.g., install, delete, or update), for example, at least one function (e.g., turn-on/turn-off of an external electronic device itself (or a part of components) or adjustment of brightness (or resolution) of a display) of an external electronic device (e.g., the electronic device 102 ) which communicates with the electronic device, an application running in the external electronic device, or a service (e.g., a call service, a message service, or the like) provided from the external electronic device.

According to an embodiment, the application 1170 may include an application (e.g., a health care application of a mobile medical device, and the like) which is assigned in accordance with an attribute of the external electronic device (e.g., the electronic device 102). According to an embodiment, the application 1170 may include an application which is received from an external electronic device (e.g., the electronic device 102). According to an embodiment, the application 1170 may include a preloaded application or a third party application which is downloadable from a server. The element titles of the program module 1110 according to the embodiment may be modifiable depending on kinds of OSs.

According to various embodiments, at least a part of the program module 1110 may be implemented by software, firmware, hardware, or a combination of two or more thereof. At least a portion of the program module 1110 may be implemented (e.g., executed), for example, by the processor (e.g., the processor 120). At least a portion of the program module 1110 may include, for example, a module, a program, a routine, sets of instructions, or a process for performing one or more functions.

The term "module" used in this disclosure may represent, for example, a unit including one or more combinations of hardware, software and firmware. For example, the term "module" may be interchangeably used with the terms "unit", "logic", "logical block", "component" and "circuit". The "module" may be a minimum unit of an integrated component or may be a part thereof. The "module" may be a minimum unit for performing one or more functions or a part thereof. The "module" may be implemented mechanically or electronically. For example, the "module" may include at least one of an application-specific IC (ASIC) chip, a field-programmable gate array (FPGA), and a programmable-logic device for performing some operations, which are known or will be developed.

At least a portion of an apparatus (e.g., modules or functions thereof) or a method (e.g., operations) according to various embodiments may be, for example, implemented by instructions stored in a computer-readable storage media in the form of a program module. The instruction, when executed by a processor (e.g., the processor 120), may cause the one or more processors to perform a function corresponding to the instruction. The computer-readable storage media, for example, may be the memory 130.

The computer-readable storage media according to various embodiments may store a program for executing an operation in which a communication module receives an application package from an external device and provides the application package to a normal module of a processor, an operation in which the normal module determines whether a secure application is included in at least a portion of the application package, and an operation in which the secure module of the processor installs the secure application in the secure module or in a memory associated with the secure module.

The computer-readable storage media may include a hard disk, a floppy disk, a magnetic media (e.g., a magnetic tape), an optical media (e.g., a compact disc read only memory (CD-ROM) and a digital versatile disc (DVD)), a magneto-optical media (e.g., a floptical disk), and hardware devices (e.g., a read only memory (ROM), a random access memory (RAM), or a flash memory). Also, a program instruction may include not only a mechanical code such as things generated by a compiler but also a high-level language code executable on a computer using an interpreter. The above-mentioned hardware devices may be configured to operate as one or more software modules to perform operations according to various embodiments, and vice versa.

Modules or program modules according to various embodiments may include at least one or more of the above-mentioned elements, some of the above-mentioned elements may be omitted, or other additional elements may be further included therein. Operations executed by modules, program modules, or other elements according to various embodiments may be executed by a successive method, a parallel method, a repeated method, or a heuristic method. Also, a part of operations may be executed in different sequences, omitted, or other operations may be added.

A method for executing an application according to various embodiments of the present disclosure may output a recommended app, which is dynamically changed based on an app that is executed in a first display region, in a second display region.

A method for executing an application according to various embodiments of the present disclosure may allow the user to easily access an app, which the user needs, by displaying a recommended app in a second display region in consideration with content displayed in a first display region or an app usage pattern of the user.

A method for executing an application according to various embodiments of the present disclosure may allow the user to easily access information, which the user wants, with a simple manipulation by outputting a recommended app, which enters a specific execution state based on a keyword extracted from a first display region.

Although the present disclosure has been described with an exemplary embodiment, various changes and modifications may be suggested to one skilled in the art. It is intended that the present disclosure encompass such changes and modifications as fall within the scope of the appended claims.

The above embodiments of the present disclosure are illustrative and not limitative. Various alternatives and equivalents are possible. Other additions, subtractions, or modifications are obvious in view of the present disclosure and are intended to fall within the scope of the appended claims.

While the present disclosure has been shown and described with reference to various embodiments thereof, it will be understood by those skilled in the art that various changes in form and details may be made therein without departing from the scope of the present disclosure as defined by the appended claims and their equivalents.

## Claims

1. An application execution method performed in an electronic device, the method comprising:
extracting at least one keyword from content displayed in a first display region of the electronic device;
outputting a shortcut of at least one recommended app in a second display region based on the extracted keyword; and
if an input for selecting one of the at least one recommended app is received, executing the selected recommended app in the first display region,
wherein the selected recommended app enters a specified execution state based on the extracted keyword.

2. The method of claim 1, wherein the outputting of the shortcut comprises:
outputting the shortcut in the second display region, wherein the second display region is arranged adjacent to the first display region.

3. The method of claim 1, wherein the outputting of the shortcut comprises:
determining a display sequence of the recommended apps based on an app usage pattern of a user, wherein the app usage pattern is stored in a memory of the electronic device.

4. The method of claim 3, wherein the determining of the display sequence comprises:
determining the display sequence based on a number of times that an app of the recommended apps is executed, wherein the app of the recommended apps is executed together with a first app displayed in the first display region at a same time or within a specified time range.

5. The method of claim 1, wherein the outputting of the shortcut comprises:
outputting the shortcut of the at least one recommended app in the second display region, wherein the at least one recommended app belongs to a category that is the same as or similar to a category of a first app that is output in the first display region.

6. The method of claim 1, wherein the executing comprises:
displaying, in the second display region, a shortcut of a first app output in the first display region.

7. The method of claim 1, wherein the entering of the specified execution state by the selected recommended app comprises:
recording the extracted keyword in a data input field of the selected recommended app automatically.

8. The method of claim 1, further comprising:
updating the second display region based on the selected recommended app if the selected recommended app is executed in the first display region.

9. The method of claim 1, wherein the extracting of the at least one keyword comprises:
extracting the at least one keyword from at least one of a memo app, a message app, and a social networking service (SNS) app that are being executed in the first display region.

10. An electronic device comprising:
a processor;
a memory operatively connected to the processor; and
a display divided into a first display region and a second display region,
wherein the processor is configured to:
extract at least one keyword from content displayed in the first display region;
output a shortcut of at least one recommended app in the second display region, based on the extracted keyword;
if an input for selecting one of the at least one recommended app is received, execute the selected recommended app in the first display region,
wherein the selected recommended app enters a specified execution state, based on the extracted keyword.

11. The electronic device of claim 10, wherein a display panel corresponding to the first display region is distinguished from a display panel corresponding to the second display region.

12. The electronic device of claim 10, wherein the memory stores an app usage pattern of a user, and
wherein the processor determines a display sequence of the recommended apps based on the app usage pattern.

13. The electronic device of claim 10, wherein the processor displays, in the second display region, a shortcut of a first app output in the first display region.

14. The electronic device of claim 10, wherein the processor records the extracted keyword in a data input field of the selected recommended app automatically.

15. The electronic device of claim 10, wherein the processor updates the second display region based on the selected recommended app if the selected recommended app is executed in the first display region.
